# EUROPEAN PATENT SPECIFICATION

(11) **EP 1 212 545 B1**
(45) Date of publication and mention of the grant of the patent: **25.08.2004**
(21) Application number: 00906491.6
(22) Date of filing: 25.02.2000
(51) Int. Cl.: F16F 9/44, F16F 9/512

(54) **DAMPER**
DÄMPFER
AMORTISSEUR

(30) Priority: 02.03.1999 GB 9904800
(43) Date of publication of application: 12.06.2002
(73) Proprietor: ATB Sales Limited, St. Leonards on Sea, East Sussex TN37 7PZ (GB)
(72) Inventor: CULLIMORE, David, Edward, Cheltenham, Gloucestershire GL51 8DX (GB); WARD, Adrian, Roger, Witney, Oxon 0X8 5FJ (GB); WHYTE, Jon Frank Ross, Winchcombe, Gloucestershire GL54 5BT (GB)
(74) Representative: Wise, Stephen James
(86) International application number: PCT/GB2000/000687
(87) International publication number: WO 2000/052353

(56) References cited:
- EP-A- 0 884 500
- DE-A- 19 729 287
- DE-U- 29 716 274
- FR-A- 2 449 236
- GB-A- 1 229 880
- US-A- 5 148 896
- US-A- 5 788 030

## Description

The present invention relates to a damper.

Damper units of coaxial mode of construction conventionally consist of two telescopic housings in which a piston moves in a fluid-filled cylinder when the housings are telescopically moved together or apart. The movement of the piston within the cylinder is resisted by throttled flow of fluid from one side of the piston to the other via a bypass passage formed by one or more openings in the piston. Fluid flow through the passage is normally regulated so that there is little resistance to flow during movement of the housings together, i.e. the compression phase of the damper, but significant resistance during movement of the housings apart, i.e. the rebound phase of the damper. The resistance offered during the rebound phase can be variable to change the rate of permitted flow in dependence on the level of force acting to move the housings apart. In the case of a low level of force producing a low rebound speed of the damper, a generally constant resistance to flow is supplied, whereas in the case of a higher level of force producing a high rebound speed a variable resistance to flow is supplied. The resistances are provided by a valve arrangement, which is located at the piston and commonly consists of stacks of shims able to deflect in dependence on pressure loading by the fluid. The deflection provides an increase in the passage flow cross-section. Although such shim stacks can be modified in terms of number, thickness, diameter and other parameters so as to adjust sensitivity to deflection, any modification requires disassembly of the damper for access to the piston. Consequently, adjustment of the flow throttling cannot be carried out with the damper in situ.

Dampers are also known with valves adjustable by links able to be operated at an externally accessible point on the damper. Due to the mobility of the piston and consequently of the valve arrangement associated with its fluid bypass passage, such an adjustment system is inevitably complex in construction and operation and is subject to cost and weight penalties.

Apart from the described limitations on the adjustment capability of known dampers, the bypass passage in the piston of such a damper is often provided by individual openings which are respective to each fluid displacement direction and which have individual valves to separately regulate throughflow in one direction and block flow in the return direction.

The valving in that case involves numerous parts and further increases complication, cost and weight.

Document US-A-5 148 896 discloses a shock absorber which includes a cylinder with a piston slidably positioned within the cylinder.

It is therefore the principal object of the invention to provide a damper in which regulation of flow of fluid displaced during operation of the damper may be able to be adjusted without the need for disassembly of the damper and without unduly complicated measures for carrying out adjustment. A subsidiary object is the provision of a damper in which control of flow of displaced fluid can be effected by one or more valves each able to function on the one hand as a non-return valve and on the other hand as a throughflow regulating valve.

According to the present invention there is provided a damper comprising two telescopically movable housings containing a first damping chamber for a damping fluid, a second damping chamber for reception of damping fluid from and return of damping fluid to the first damping chamber and duct means for conducting the damping fluid between the chambers, a piston movable to cause displacement of damping fluid from the first to the second damping chamber by way of the duct means, and valve means for controlling flow of damping fluid through the duct means, the valve means being arranged to act on the fluid flow in a section of the duct means which is in a fixed position relative to one of the housings and being adjustable externally of that housing for variation in the rate of permitted fluid flow through the duct means, wherein the section of the duct means defines separate fluid flow paths for fluid flow between the damping chambers and the valve means is arranged to act on fluid flow in each of the paths.

In such a damper the valve means is associated with a duct section having a fixed location, in particular with respect to one of the housings, so that the valve means can be positioned to be readily accessible for external adjustment to vary the rate of fluid flow between the two damping chambers. Adjustment can thus be carried out with the damper in situ and without disassembly. Unlike conventional dampers, the chambers for interchange of displaced damping fluid are interlinked not by a passage exclusively in the piston, but by duct means which can be formed at least partly in one of the housings. In such a damper the damping chambers can be arranged, for example, concentrically rather than axially in succession within the housings. As the section of the duct means associated with the valve means defines separate flow paths for fluid flow between the chambers and the valve means is able to act on fluid flow in each path, flow regulation can be provided in both the compression phase and the rebound phase of the damper.

The stated section of the duct means is preferably provided in the respective housing in the region of one end thereof, so that the valve means is in a convenient location for access regardless of whether the housings are in a retracted or an extended state. Access is enhanced if the valve means is arranged so as to be adjustable at a circumferential wall of that housing.

The valve means is preferably independently adjustable for each of the two fluid flow paths and can be arranged to permit flow from the first to the second damping chamber along only one of the flow paths and from the second to the first damping chamber along only the other one of the flow paths. Thus, the valve means can function to allow entirely separate compression phase adjustment and rebound phase adjustment of the damping characteristics of the damper. Fluid flow in each phase is constrained to a respective path so that flow rate adjustment for one phase will have no influence on that for the other phase. Displacement flow rates can accordingly be optimised for the two phases.

For preference, the valve means comprises a valve to block fluid flow along one of the paths in one direction and to permit flow along that path in the opposite direction at a rate which increases over an initial range of progressive unblocking of the path against a first resistance and over a subsequent range of progressive unblocking of the path against a second resistance greater than the first resistance. Such a valve operates not only as a check or one-way valve, but also as a flow rate regulating valve with different responses to low and high pressures of fluid displaced in the compression or the rebound phase of the damper. In the case of a low fluid pressure, arising from a low speed of relative movement of the housings, a lower resistance to unblocking of the flow path is offered. If the relative movement of the housings is at a higher speed such as to generate a high fluid pressure, the further unblocking of the path takes place against a higher resistance. The damping action is consequently stronger when the damper is required to damp incipient oscillations of greater amplitude.

The valve preferably includes means for adjusting at least one of the first resistance and the second resistance, the two resistances preferably being adjustable independently of each other. Such an adjustment capability thus permits change in the low-speed response and in the high-speed response separately from one another. At least one of the resistances can be a rising resistance, for preference provided by resilient means such as a spring. Moreover, the valve can comprise means to vary at least the initial one of the two ranges of progressive unblocking of the associated flow path, so that the fluid pressure threshold for transition to the increased resistance, thus effectively the boundary between low-speed response and high-speed response, can be displaced.

In a preferred construction, the valve comprises a valve member co-operable with a valve seat to block flow along the associated path and movable away from the seat by fluid pressure to permit flow along the path, a first spring constantly acting on the valve member to provide the first resistance and part of the second resistance and a second spring acting on the valve member to provide the remainder of the second resistance after and only after movement of the valve member away from the seat over a distance defining the initial one of the ranges. For preference, the valve includes stop means to prevent action of the second spring on the valve member before movement thereof over that distance. The stop means can be in the form of a stop member interposed between the second spring and the valve member and locatable in a position in which the valve member is relieved of loading by the second spring. The relief of the loading of the valve member by the second spring, which is responsible for the greater resistance to unblocking of the associated flow path, means that the valve member is loaded solely by the first spring over a range of travel of the valve member corresponding to the mentioned initial range of unblocking of the flow path. In the subsequent range of unblocking of the flow path, the loading provided by the second spring is superimposed on that provided by the first spring so that the second resistance is necessarily greater than that of the first. Moreover, the second spring can be dimensioned to provide a different, in particular higher, loading than the first spring.

For preference, the stop member is guided in a carrier body to be movable over a range of travel defining the subsequent one of the ranges and is loaded by the second spring so as to be urged towards the valve seat and into an end position in which a drive surface of the stop member is disposed at a spacing from a drive surface of the valve member, the drive surfaces being co-operable under movement of the valve member away from the seat to cause the stop member to be moved against the loading of the second spring. In that case, the stop member and carrier body can be provided with stop surfaces co-operable to define the mentioned end position of the stop member. The valve can further include an adjusting member mounted in the carrier body to be adjustable relative thereto for varying the loading of the stop member by the second spring.

The first spring, thus that which provides the resistance over the initial range of unblocking of the flow path, can be arranged between the valve member and the adjusting member to so load the valve member as to constantly urge the valve member towards the valve seat.

The carrier body can then be mounted in the housing with the duct means to be adjustable relative to that housing for varying the loading of the valve member by the first spring. Since the adjusting member is associated with both springs, the afore-described adjustment of the adjusting member to vary the loading supplied by the second spring will, in this construction, also vary the loading supplied by the first spring; this can be compensated for by appropriately adjusting the carrier body, which influences the loading of the first spring alone. As adjustment of the carrier body also changes the position of the drive surface of the stop member, the adjusting of the first spring can be undertaken in isolation if the adjusting member comprises an outer part mounted in the carrier body and an inner part mounted in the outer part to be adjustable relative thereto for varying the loading of the valve member by the first spring. The valve member itself is preferably provided with a stem having a portion guided in the stop member and/or a portion guided in the adjusting member.

With advantage, the valve means comprises two such valves respectively to block flow along one of the paths from the first to the second damping chamber and permit flow along that path from the second to the first chamber and to block flow along the other one of the paths from the second to the first chamber and permit flow along that path from the first to the second chamber. The provision of two such valves provides a fully independent adjustment capability for the two active phases of the damper and for the two speed stages of each phase.

The piston can, if desired, be mechanically positively driven by a piston rod or can be fluid driven. In the latter case, for example, the housings can additionally contain a spring chamber for a gaseous medium compressible on telescopic movement of the housings together to superimpose a spring action on a damping action provided by the control of the flow of the damping fluid, the piston being arranged to be movable by the compressed gaseous medium. The damper, which can operate with hydraulic oil, can thus be combined with a spring operable by gas or air.

An embodiment of the present invention will now be more particularly described by way of example with reference to the accompanying drawings, in which:
Fig. 1 is a schematic axial section of a damper, with integrated spring, embodying the invention;
Fig. 2 is a cross-section, along the line II-II of Fig. 1, showing valves of the damper;
Fig. 3 is a longitudinal sectional view, to enlarged scale, of one of the valves in a closed state;
Fig. 4 is a view similar to Fig. 3, but showing the valve in a partly open state and at the point of transition from flow regulation in low-speed operation of the damper to flow regulation in high speed operation; and
Fig. 5 is a view similar to Fig. 3, but showing the valve in a fully open state.

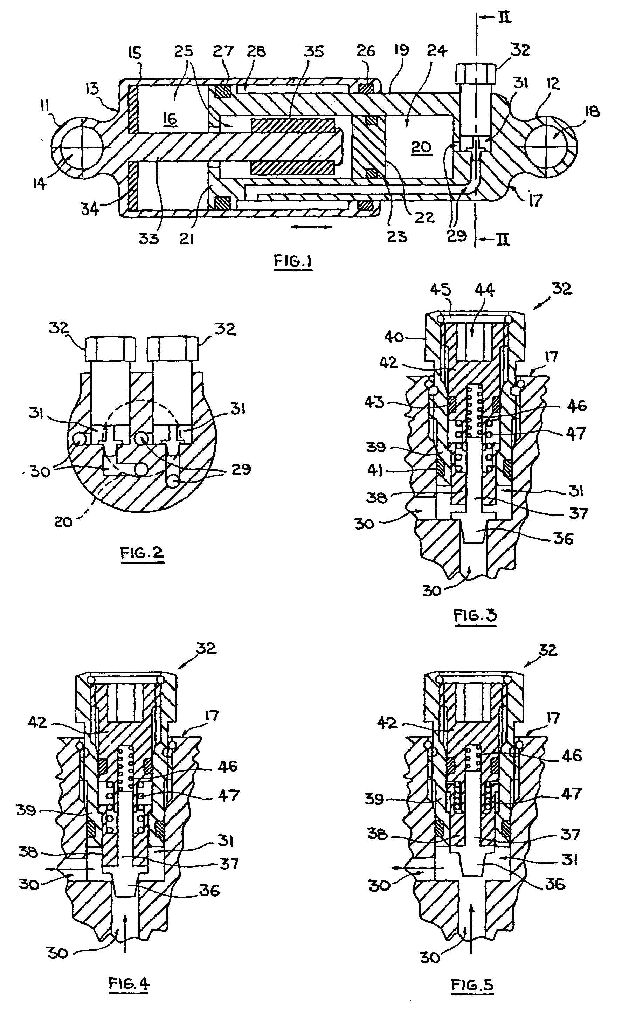

Referring now to the drawings, there is shown in Fig. 1 a hydraulic damper 10 with, in this embodiment, an integrated coaxial pneumatic spring. The damper is basically composed of an outer housing 11 and an inner housing 12, which are telescopically interengaged for movement together to execute a compression stroke and movement apart to execute a rebound stroke. In an installed state, the spring behaviour is effective primarily in the compression stroke to soften shock forces transmitted between two components, for example a vehicle wheel and vehicle body, intercoupled by the damper and the damping behaviour primarily in the rebound stroke to damp oscillations arising from spring restoration. Damping behaviour is also present in the compression stroke, but to a lesser degree.

The outer housing 11 has an end portion 13, which incorporates a coupling eye 14, and a tubular body portion 15 defining a cylindrical blind bore 16. The inner housing 12 similarly comprises an end portion 17, which also has a coupling eye 18, and a tubular body portion 19 which is concentric with and radially spaced from the body portion 15 of the outer housing 11 and which defines a cylindrical blind bore 20 and, at its end remote from the end portion 17, an annular piston member 21.

Slidably arranged in the bore 20 of the inner housing 12 is a piston 22 provided with an annular seal 23 sealingly bearing against the inner wall surface of the bore 20. The piston 22 inclusive of seal 23 separates an inner, or first, damping chamber 24 filled with hydraulic oil from a spring chamber 25 filled with air under pressure. Since the bore 20 of the inner housing 12 communicates with the bore 16 of the outer housing 11 via the opening in the piston member 21, the spring chamber 25 is formed by parts of both bores. The inner damping chamber 24 is formed solely by part of the bore 20. The respective volumes of the two chambers 24 and 25 vary in dependence on the position of the piston 22.

The body portion 15 of the outer housing 11 is provided at its free end with a radially inwardly directed projection in which is seated an annular seal 26 in sealing contact with the outer wall surface of the body portion 19 of the inner housing 12. The body portion 19 is analogously provided at its free end with a radially outwardly directed projection in which is seated a seal 27 in sealing contact with the inner wall surface of the body portion 15 of the outer housing 11. The two projections and variable lengths of the concentric body portions 15 and 19, which are disposed therebetween, of the two housings bound an outer, or second, damping chamber 28 similarly filled with the hydraulic oil. The projection with the seal 27 separates this chamber from the spring chamber 25. The outer damping chamber 28 is thus formed from a further part of the bore 16.

The two damping chambers 24 and 28 are interconnected in terms of flow by two ducts 29 and 30 (the latter shown in Fig. 2) each having a section extending in the end portion 17 of the inner housing 12 and opening at the end wall of the bore 20 and a section extending in the body portion 19 of the same housing and opening at the outer circumference of that body portion. The sections of the two ducts in the body portion 19 can in fact be provided by a common cavity therein and a common inlet and outlet port of the outer damping chamber 28. The section of each duct in the end portion 17 communicates with a respective valve chamber 31 accommodating a respective valve 32, the valve seat of which is conveniently formed at an opening of the associated duct section into the valve chamber. The duct 30 functions as a flow path for damping fluid from the inner damping chamber 24 to the outer damping chamber 28 and the associated valve 32 serves to regulate fluid flow in that direction and prevent flow in the opposite direction. Conversely, the duct 29 functions as a flow path for damping fluid from the outer chamber 28 to the inner damping 24 and the associated valve 32 correspondingly regulates flow in that direction and blocks flow in the opposite direction. The construction and operation of the valves 32, which are identical and operate in reverse sense solely as a consequence of reversed connections of the ducts 29 and 30 to the valve chambers 31, are described in more detail further below.

The piston 22 is normally displaced in the bore 20 in the compression phase of the damper by the pressure of compressed air in the spring chamber 25 and in the rebound phase primarily by displacement of hydraulic fluid from the outer damping chamber 28 to the inner damping chamber 24. The spring part of the damper, however, incorporates an auxiliary drive for the piston 22, in particular a drive rod 33 which extends along the common axis of the bores 16 and 20 and which in the unloaded state of the damper is disposed at a spacing from the piston. The piston thus floats in the bore 20. The end stages of movement of the housings 11 and 12 in the compression and rebound phases are cushioned by resilient cushioning elements. The cushioning element associated with the compression phase comprises a rubber body 34 adjoining the end portion 13 of the outer housing 11 and co-operable with the piston member 21, whilst the cushioning element associated with the rebound phase comprises a compressible elastomer cylinder 35 mounted on the drive rod 33 and co-operable with an inwardly protruding lip of the piston member 21.

In the case of a compression stroke of the housings 11 and 12, thus telescopic movement of the housings together, the piston member 21 moves in the bore 16 to reduce the volume of the spring chamber 25 and thus cause progressive compression of the air in the chamber. The compressing air acts on the piston 22 to move it in the bore 20 in opposite sense and thus reduce the volume of the inner damping chamber 24. The movement of the piston member 21 in the bore 16 has the simultaneous effect of increasing the volume of the outer damping chamber 28. The reduction in volume of the inner damping chamber 24 and increase in volume of the outer damping chamber 28 causes displacement of hydraulic oil from the former to the latter via the duct 30 under the control of the associated valve 32, which throttles the flow through the duct. Flow through the duct 29 is blocked in this phase. The degree of throttling of the flow determines the degree of damping, which is preferably relatively light in the compression phase. In this phase, movement of the two coupled components towards one another takes place against the resistance presented by the compressing air functioning as a pneumatic spring and the movement is damped to a selected degree by the throttled displacement of the hydraulic oil.

If the rate of movement of the housings together is high, the air in the spring chamber 27 may compress so rapidly that the piston 22 cannot move, due to the pressure created by throttling of the outflow of hydraulic oil from the inner damping chamber 24, at the same rate as that of the relative movement of the housings. If the two movements become out-of-phase, the piston 22 will move relative to the outer housing 11 in the sense of overcoming its spacing from the drive rod 33. The piston will then come into contact with the rod 33 and thereafter be mechanically positively driven by the rod.

In the case of the rebound stroke, which occurs on relief of the loading of the coupled components that induced the compression stroke, the force generated by the compressed air in the spring chamber 25 urges the housings 11 and 12 apart, whereby the piston member 21 enlarges the volume of the spring chamber 25. Simultaneously, the volume of the outer damping chamber 28 is reduced. The reducing volume of the latter chamber causes displacement of oil therefrom to the inner damping chamber 24 through the duct 29 under the control of the associated valve 32. In that case the valve exerts a relatively strong throttling effect on the flow to produce an appreciable retardation or damping of the relative movement of housings 11 and 12 apart.

The detail construction of one of the valves 32, in particular that associated with the duct 30, is shown in Figs. 3 to 5. The valve chamber 31 receiving the valve has the form of cylindrical bore open at one end at the circumference of the body portion 19 of the inner housing 12 and having at the other end a valve seat around the entry of the duct 30. The exit of the duct 30 is at the circumferential wall of the valve chamber bore. The valve 32 comprises a poppet valve member 36 sealingly engageable with the valve seat and provided with a stem 37 slidably guided over a portion of its length in the narrower part of a stepped bore in a stop member 38. The stop member 38 is in turn slidably guided in a bore in a carrier body 39, which is threadedly mounted in the valve chamber bore. The carrier body has suitable means for engagement by hand or a tool to enable turning, for example a hexagon head 40 disposed externally of the outer circumference of the end portion 17 of the inner housing 12 and engageable by an adjusting tool such as a spanner. The carrier body 39 is sealed relative to the wall of the valve chamber bore by an O-ring seal 41.

An adjusting member 42 is threadedly engaged in the bore of the carrier body 39 and is sealed relative to the wall of that bore by a seal 43. The adjusting member similarly has suitable means for engagement by hand or a tool to enable turning, for example a hexagonal-section socket 44 for engagement therein of an adjusting tool such as an Allen key, and a blind guide bore slidably receiving a further portion of the valve member stem 37. The guide bore extends in part in a spigot-shaped projection of the adjusting member 42, which projection protrudes into the wider part of the stepped bore of the stop member 38. The adjusting member 42 is prevented from removal from the carrier body 39 by a circlip 45.

As is apparent from Figs. 3 to 5, the male threads mounting the carrier body 39 and adjusting member 42 are shorter in axial length than the respectively co-operating female threads so that the carrier body and adjusting member are capable of ranges of adjustment in axial direction.

The valve member 36 is urged into engagement with the valve seat by a relatively light, in terms of spring force, first compression spring 46 acting between the free end of the stem 37 and the base of the blind guide bore in the adjusting member 42. The stop member 38 is urged by a stronger, second compression spring 47 towards the valve seat and in particular into an end position defined by interengaging stop surfaces of, respectively, the stop member and the carrier body. The spring 47 is centred by the spigot-shaped projection of the adjusting member 42 and acts between that member and a step defining the transition from the wider to the narrower part of the bore in the stop member 38. In this end position of the stop member 38, the end face thereof, which forms a drive surface, is disposed at a spacing from a co-operating drive surface at a flange of the valve member 36 in the rest state of the valve, that is to say a state free of pressure loading by hydraulic oil in the duct 30 or at least free of loading in the sense of displacement of the valve member off the valve seat.

In the compression phase of the damper as previously described, thus when oil is displaced by the piston 22 from the inner damping chamber 24 through the duct 30 to the outer damping chamber 28, the pressure induced in the oil lifts the valve member 36 off the valve seat against the resistance of the first spring 46. The state of the valve prior to this action is shown in Fig. 3. If the speed of relative movement of the housings 11 and 12 together is relatively low, the fluid pressure is correspondingly low and will not cause the fluid flow path, i.e. the flow cross-section of the duct 30, to be unblocked by the valve member 36 beyond an initial range represented by the available travel of the valve member up to contact of its drive surface with that of the stop member 38. This range can be varied by screwing the carrier body 39 into or out of the valve chamber bore so as to move the drive surface of the stop member 38 in the end position thereof closer to or further from the valve seat. The adjustment of the carrier body 39 in this manner simultaneously varies the loading of the valve member 36 by the first spring 46, thereby to vary the resistance it offers to the fluid flow and consequently the permitted fluid flow rate in low-speed operation in the compression phase. The relative positions of the carrier body 39 and stop member 38 and the loading provided by the second spring 47 are not influenced by this adjustment.

If the fluid pressure is sufficiently high to cause the drive surfaces of the valve member 36 and stop member 38 to be brought into contact, as shown in Fig. 4, and to continue to move the valve member away from the valve seat, which pressure arises in the case of high-speed relative movement of the housings 11 and 12 together, the stop member is then displaced by the valve member against the loading of the second spring 47. This loading is thus added to that of the first spring 46 to provide a now significantly increased resistance to movement of the valve member in the sense of further unblocking of the flow path. The fluid flow rate along the path can accordingly increase only to the extent that the fluid pressure can overcome this greater resistance. An amplified resistance is thus available for the case of abrupt compression of the damper housings when the damper is subjected to sudden shock loading. The resistance jointly provided by the springs 46 and 47 can be varied by screwing the adjusting member 42 into or out of the carrier body 39. This primarily compresses or relieves the second spring 47, but additionally influences the loading of the first spring 46. Compensation for the latter influence, which will also carry over to the low-speed operation previously described, can be provided by compensating outward adjustment of the carrier body 39 in the valve chamber bore. Alternatively, since any carrier body adjustment also repositions the stop member relative to the valve seat and thus changes the spacing of the drive surfaces, the adjusting member can be formed with a separately adjustable inner part or insert against which the first spring 46 bears and which can then be adjusted to vary the loading of that spring in isolation, thus without causing repositioning of the stop member.

The fully open state of the valve 32 is illustrated in Fig. 5, in which the stop member 38 has displaced to the maximum extent permitted by compression of the second spring 47.

The valve 32 in the duct 30 thus provides separate adjustments of flow resistance, i.e. degree of flow throttling, in low-speed and high-speed operation of the damper in the compression phase and also, as is self-evident from the illustrated geometry of valve seat, valve member and associated openings at the valve chamber 31, blocking of return flow. The identical valve 32 in the duct 29 is effective in analogous manner in the rebound phase. The two valves can be differently adjusted to accommodate the different damping characteristics required in the two phases and in low-speed as opposed to high speed damper operation and any adjustments can be performed by direct action on the valves at their accessible external location.

## Claims

1. A damper comprising two telescopically movable housings (11, 12) containing a first damping chamber (24) for a damping fluid, a second damping chamber (28) for reception of damping fluid from and return of damping fluid to the first damping chamber (24) and duct means (29, 30) for conducting the damping fluid between the chambers and a piston (22) movable to cause displacement of damping fluid from the first to the second damping chamber (24, 28) by way of the duct means (29, 30) **characterised by**: valve means (32) for controlling flow of damping fluid through the duct means, the valve means (32) being arranged to act on the fluid flow in a section of the duct means (29, 30) which is in a fixed position relative to one (12) of the housings and being adjustable externally of that housing for variation in the rate of permitted fluid flow through the duct means, wherein the section of the duct means defines separate fluid flow paths (29 and 30) for fluid flow between the damping chambers (24, 28) and the valve means (32) is arranged to act on fluid flow in each of the paths.

2. A damper as claimed in claim 1, wherein the section of the duct means (29, 30) is provided in said one housing in the region of an end thereof.

3. A damper as claimed in claim 1 or claim 2, wherein the valve means (32) is independently adjustable for each flow path (29 or 30).

4. A damper as claimed in any one of the preceding claims, wherein the valve means (34) is arranged to permit flow from the first (24) to the second (28) damping chamber along only one (30) of the flow paths and from the second (28) to the first (24) damping chamber along only the other one (29) of the flow paths.

5. A damper as claimed in any one of the preceding claims, wherein the valve means comprises a valve (32) to block fluid flow along one of the paths in one direction and to permit flow along that path in the opposite direction at a rate which increases over an initial range of progressive unblocking of the path against a first resistance (46) and over a subsequent range of progressive unblocking of the path against a second resistance (46 and 47) greater than the first resistance (46).

6. A damper as claimed in claim 5, wherein the valve (32) comprises means (39, 42) for adjusting at least one of the first resistance (46) and the second resistance (46 and 47).

7. A damper as claimed in claim 5 or claim 6, wherein at least one of the resistances (46; 46, 47) is a rising resistance.

8. A damper as claimed in any one of claims 5 to 7, wherein the valve comprises means (38, 39) to vary at least the initial one of the ranges.

9. A damper as claimed in any one of claims 5 to 8, wherein the valve comprises a valve member (36) co-operable with a valve seat to block said flow and movable away from the seat by fluid pressure to permit said flow, a first spring (46) constantly acting on the valve member (36) to provide the first resistance and part of the second resistance and a second spring (47) acting on the valve member (36) to provide the remainder of the second resistance after and only after movement of the valve member (36) away from the seat over a distance defining the initial one of the ranges.

10. A damper as claimed in claim 9, wherein the valve includes stop means to prevent action of the second spring (47) on the valve member (36) before movement thereof over said distance.

11. A damper as claimed in claim 10, wherein the stop means comprises a stop member (38) interposed between the second spring (47) and the valve member (36) and locatable in a position in which the valve member is relieved of loading by the second spring.

12. A damper as claimed in claim 11, wherein the stop member (38) is guided in a carrier body (39) to be movable over a range of travel defining the subsequent one of the ranges and is loaded by the second spring (47) so as to be urged towards the valve seat and into an end position in which a drive surface of the stop member (38) is disposed at a spacing from a drive surface of the valve member (36), the drive surfaces being co-operable under movement of the valve member (36) away from the seat to cause the stop member (38) to be moved against the loading of the second spring (47).

13. A damper as claimed in claim 12, wherein the valve (32) comprises an adjusting member (42) mounted in the carrier body (39) to be adjustable relative thereto for varying the loading of the stop member (38) by the second spring (47).

14. A damper as claimed in claim 13, wherein the first spring (46) is arranged between the valve member (36) and the adjusting member (42) to so load the valve member as to constantly urge the valve member towards the valve seat.

15. A damper as claimed in claim 14, wherein the carrier body (39) is mounted in said one housing (12) to be adjustable relative thereto for varying the loading of the valve member (36) by the first spring (46).

16. A damper as claimed in any one of claims 5 to 15, wherein the valve means comprises two such valves (32) respectively to block flow along one of the paths (29) from the first (24) to the second (28) damping chamber and permit flow along that path (29) from the second (28) to the first (24) chamber and to block flow along the other one (30) of the paths from the second (28) to the first (24) chamber and permit flow along that path (30) from the first (24) to the second chamber (28).

17. A damper as claimed in any one of the preceding claims, wherein the housings additionally contain a spring chamber (16) for a gaseous medium compressible on telescopic movement of the housings (11, 12) together to superimpose a spring action on a damping action provided by the control of the flow of the damping fluid, the piston (22) being arranged to be movable by the compressed gaseous medium.

## Patentansprüche

1. Dämpfer, der zwei teleskopartig bewegbare Gehäuse (11, 12), die eine erste Dämpfungskammer (24) für ein Dämpfungsfluid, eine zweite Dämpfungskammer (28) zur Aufnahme von Dämpfungsfluid aus der und zur Rückführung von Dämpfungsfluid zur ersten Dämpfungskammer (24) enthalten, ein Durchführungsmittel (29, 30) zum Durchleiten des Dämpfungsfluids zwischen den Kammern sowie einen Kolben (22) umfaßt, der bewegbar ist, um eine Verdrängung von Dämpfungsfluid von der ersten zur zweiten Dämpfungskammer (24, 28) über das Durchführungsmittel (29, 30) zu bewirken, **gekennzeichnet durch** ein Ventilmittel (32) zur Steuerung der **durch** das Durchführungsmittel erfolgenden Dämpfungsfluidströmung, wobei das Ventilmittel (32) vorgesehen ist, um auf die Fluidströmung in einem Teilabschnitt des Durchführungsmittels (29, 30) einzuwirken, der sich im Verhältnis zu einem (12) der Gehäuse in einer feststehenden Position befindet und außerhalb dieses Gehäuses einstellbar ist, um die Menge der zugelassenen Fluidströmung **durch** das Durchführungsmittel zu variieren, wobei der Teilabschnitt des Durchführungsmittels separate Fluidströmungswege (29 und 30) für die Fluidströmung zwischen den Dämpfungskammern (24, 28) definiert und das Ventilmittel (32) vorgesehen ist, um auf die Fluidströmung in jedem der Wege einzuwirken.

2. Dämpfer nach Anspruch 1, bei dem der Teilabschnitt des Durchführungsmittels (29, 30) in dem einen Gehäuse im Bereich von einem Ende davon vorgesehen ist.

3. Dämpfer nach Anspruch 1 oder Anspruch 2, bei dem das Ventilmittel (32) für jeden Strömungsweg (29 oder 30) unabhängig einstellbar ist.

4. Dämpfer nach einem der vorhergehenden Ansprüche, bei dem das Ventilmittel (34) vorgesehen ist, um eine Strömung von der ersten (24) zur zweiten (28) Dämpfungskammer lediglich entlang einem (30) der Strömungswege sowie von der zweiten (28) zur ersten (24) Dämpfungskammer lediglich entlang dem anderen (29) der Strömungswege zuzulassen.

5. Dämpfer nach einem der vorhergehenden Ansprüche, bei dem das Ventilmittel ein Ventil (32) umfaßt, um eine Fluidströmung entlang einem der Wege in einer Richtung zu blockieren und eine Strömung entlang diesem Weg in der entgegengesetzten Richtung in einer Menge zuzulassen, die über einen anfänglichen Bereich fortschreitender Entblockierung des Wegs gegen einen ersten Widerstand (46) und über einen anschließenden Bereich fortschreitender Entblockierung des Wegs gegen einen zweiten Widerstand (46 und 47), der größer als der erste Widerstand (46) ist, zunimmt.

6. Dämpfer nach Anspruch 5, bei dem das Ventil (32) ein Mittel (39, 42) umfaßt, um mindestens den ersten Widerstand (46) oder den zweiten Widerstand (46 und 47) einzustellen.

7. Dämpfer nach Anspruch 5 oder Anspruch 6, bei dem mindestens einer der Widerstände (46; 46, 47) ein zunehmender Widerstand ist.

8. Dämpfer nach einem der Ansprüche 5 bis 7, bei dem das Ventil ein Mittel (38, 39) umfaßt, um mindestens den anfänglichen der Bereiche zu variieren.

9. Dämpfer nach einem der Ansprüche 5 bis 8, bei dem das Ventil ein Ventilelement (36) umfaßt, das mit einem Ventilsitz zusammenwirken kann, um die Strömung zu blockieren, und das durch Fluiddruck aus dem Sitz herausbewegt werden kann, um die Strömung zuzulassen, wobei eine erste Feder (46) ständig auf das Ventilelement (36) einwirkt, um den ersten Widerstand und einen Teil des zweiten Widerstands bereitzustellen, und eine zweite Feder (47) auf das Ventilelement (36) einwirkt, um nach und lediglich nach erfolgter Herausbewegung des Ventilelements (36) aus dem Sitz über eine den anfänglichen der Bereiche definierende Distanz den Rest des zweiten Widerstands bereitzustellen.

10. Dämpfer nach Anspruch 9, bei dem das Ventil ein Anschlagmittel beinhaltet, um ein Einwirken der zweiten Feder (47) auf das Ventilelement (36), bevor es sich über die Distanz bewegt hat, zu verhindern.

11. Dämpfer nach Anspruch 10, bei dem das Anschlagmittel ein Anschlagelement (38) umfaßt, das sich zwischen der zweiten Feder (47) und dem Ventilelement (36) befindet und in eine Position gebracht werden kann, in der das Ventilelement von der Belastung durch die zweite Feder befreit ist.

12. Dämpfer nach Anspruch 11, bei dem das Anschlagelement (38) in einem Trägerkörper (39) so geführt ist, daß es über einen Bewegungsbereich, der den anschließenden der Bereiche definiert, bewegbar ist, und durch die zweite Feder (47) so belastet wird, daß es zum Ventilsitz hin und in eine Endposition gedrückt wird, in der sich eine Antriebsoberfläche des Anschlagelements (38) in einem Abstand von einer Antriebsoberfläche des Ventilelements (36) befindet, wobei die Antriebsoberflächen unter aus dem Sitz heraus erfolgender Bewegung des Ventilelements (36) zusammenwirken können, um zu bewirken, daß das Anschlagelement (38) gegen die Belastung der zweiten Feder (47) bewegt wird.

13. Dämpfer nach Anspruch 12, bei dem das Ventil (32) ein Einstellelement (42), das im Trägerkörper (39) montiert ist, umfaßt, das im Verhältnis dazu eingestellt werden kann, um die Belastung des Anschlagelements (38) durch die zweite Feder (47) zu variieren.

14. Dämpfer nach Anspruch 13, bei dem die erste Feder (46) zwischen dem Ventilelement (36) und dem Einstellelement (42) vorgesehen ist, um das Ventilelement so zu belasten, daß das Ventilelement ständig zum Ventilsitz hin gedrückt wird.

15. Dämpfer nach Anspruch 14, bei dem der Trägerkörper (39) in dem einen Gehäuse (12) so montiert ist, daß er im Verhältnis dazu einstellbar ist, um die Belastung des Ventilelements (36) durch die erste Feder (46) zu variieren.

16. Dämpfer nach einem der Ansprüche 5 bis 15, bei dem das Ventilmittel zwei derartige Ventile (32) umfaßt, um eine Strömung entlang einem der Wege (29) von der ersten (24) zur zweiten (28) Dämpfungskammer zu blockieren und eine Strömung entlang diesem Weg (29) von der zweiten (28) zur ersten (24) Kammer zuzulassen bzw. eine Strömung entlang dem anderen (30) der Wege von der zweiten (28) zur ersten (24) Kammer zu blockieren und eine Strömung entlang diesem Weg (30) von der ersten (24) zur zweiten (28) Kammer zuzulassen.

17. Dämpfer nach einem der vorhergehenden Ansprüche, bei dem die Gehäuse zusätzlich eine Federkammer (16) für ein gasförmiges Medium enthalten, das bei gemeinsamer teleskopartiger Bewegung der Gehäuse (11, 12) zusammengedrückt werden kann, um eine durch die Steuerung der Strömung des Dämpfungsfluids bereitgestellte Dämpfungswirkung durch eine Federwirkung zu überlagern, wobei der Kolben (22) so vorgesehen ist, daß er durch das zusammengedrückte gasförmige Medium bewegt werden kann.

## Revendications

1. Amortisseur comprenant deux boîtiers (11, 12) déplaçables télescopiquement, contenant une première chambre d'amortissement (24) pour un fluide d'amortissement, une deuxième chambre d'amortissement (28) pour recevoir du fluide d'amortissement depuis la première chambre d'amortissement et renvoyer du fluide d'amortissement à la première chambre d'amortissement (24) et un moyen de conduits (29, 30) destiné à conduire le fluide d'amortissement entre les chambres et un piston (22) pouvant se déplacer pour provoquer le déplacement du fluide d'amortissement de la première à la deuxième chambre d'amortissement (24, 28) par le biais du moyen de conduits (29, 30), **caractérisé par** un moyen de soupape (32) pour contrôler l'écoulement du fluide d'amortissement à travers le moyen de conduits, le moyen de soupape (32) étant prévu pour agir sur l'écoulement de fluide dans une section du moyen de conduits (29, 30) qui est dans une position fixe par rapport à l'un (12) des boîtiers et pouvant être ajusté à l'extérieur de ce boîtier en vue de faire varier le débit d'écoulement de fluide permis à travers le moyen de conduits, la section du moyen de conduits définissant des chemins d'écoulement de fluide séparés (29 et 30) pour l'écoulement de fluide entre les chambres d'amortissement (24, 28) et le moyen de soupape (32) étant prévu pour agir sur l'écoulement de fluide dans chacun des chemins.

2. Amortisseur selon la revendication 1, dans lequel la section du moyen de conduits (29, 30) est prévue dans ledit premier boîtier dans la région d'une de ses extrémités.

3. Amortisseur selon la revendication 1 ou 2, dans lequel le moyen de soupape (32) est ajustable indépendamment pour chaque chemin d'écoulement (29 ou 30).

4. Amortisseur selon l'une quelconque des revendications précédentes, dans lequel le moyen de soupape (34) est prévu pour permettre l'écoulement de la première chambre d'amortissement (24) vers la deuxième chambre d'amortissement (28) le long d'un seul (30) des chemins d'écoulement et depuis la deuxième (28) vers la première (24) chambre d'amortissement le long de seulement l'autre (29) des chemins d'écoulement.

5. Amortisseur selon l'une quelconque des revendications précédentes, dans lequel le moyen de soupape comprend une soupape (32) pour bloquer l'écoulement de fluide le long de l'un des chemins dans une direction et pour permettre l'écoulement le long de ce chemin dans la direction opposée à un débit qui augmente sur une plage initiale de déblocage progressif du chemin à l'encontre d'une première résistance (46) et sur une plage subséquente de déblocage progressif du chemin à l'encontre d'une deuxième résistance (46 et 47) supérieure à la première résistance (46).

6. Amortisseur selon la revendication 5, dans lequel la soupape (32) comprend un moyen (39, 42) pour ajuster au moins l'une de la première résistance (46) et de la deuxième résistance (46 et 47).

7. Amortisseur selon la revendication 5 ou la revendication 6, dans lequel au moins l'une des résistances (46 ; 46, 47) est une résistance montante.

8. Amortisseur selon l'une quelconque des revendications 5 à 7, dans lequel la soupape comprend un moyen (38, 39) pour faire varier au moins la plage initiale des plages.

9. Amortisseur selon l'une quelconque des revendications 5 à 8, dans lequel la soupape comprend un organe de soupape (36) pouvant coopérer avec un siège de soupape pour bloquer ledit écoulement et pouvant s'écarter du siège par pression de fluide pour permettre ledit écoulement, un premier ressort (46) agissant constamment sur l'organe de soupape (36) pour fournir la première résistance et une partie de la deuxième résistance et un deuxième ressort (47) agissant sur l'organe de soupape (36) pour fournir le reste de la deuxième résistance après et uniquement après le mouvement de l'organe de soupape (36) à l'écart du siège sur une distance définissant la plage initiale des plages.

10. Amortisseur selon la revendication 9, dans lequel la soupape comporte un moyen d'arrêt pour empêcher l'action du deuxième ressort (47) sur l'organe de soupape (36) avant son mouvement sur ladite distance.

11. Amortisseur selon la revendication 10, dans lequel le moyen d'arrêt comprend un organe de butée (38) interposé entre le deuxième ressort (47) et l'organe de soupape (36) et pouvant être positionné dans une position dans laquelle l'organe de soupape est libéré de sa charge par le deuxième ressort.

12. Amortisseur selon la revendication 11, dans lequel l'organe d'arrêt (38) est guidé dans un corps de support (39) de manière à pouvoir se déplacer sur une plage de déplacement définissant la plage suivante parmi les plages et est chargé par le deuxième ressort (47) de manière à être poussé vers le siège de soupape et dans une position d'extrémité dans laquelle une surface d'entraînement de l'organe d'arrêt (38) est disposée à un certain espacement d'une surface d'entraînement de l'organe de soupape (36), les surfaces d'entraînement pouvant coopérer par le déplacement de l'organe de soupape (36) s'écartant du siège pour causer le déplacement de l'organe d'arrêt (38) à l'encontre de la charge du deuxième ressort (47).

13. Amortisseur selon la revendication 12, dans lequel la soupape (32) comprend un organe d'ajustement (42) monté dans le corps de support (39) destiné à pouvoir être ajusté par rapport à lui pour faire varier la charge de l'organe d'arrêt (38) appliquée par le deuxième ressort (47).

14. Amortisseur selon la revendication 13, dans lequel le premier ressort (46) est disposé entre l'organe de soupape (36) et l'organe d'ajustement (42) de manière à charger l'organe de soupape pour pousser constamment l'organe de soupape vers le siège de soupape.

15. Amortisseur selon la revendication 14, dans lequel le corps de support (39) est monté dans ledit premier boîtier (12) de manière à pouvoir être ajusté par rapport à celui-ci pour faire varier la charge de l'organe de soupape (36) appliquée par le premier ressort (46).

16. Amortisseur selon l'une quelconque des revendications 5 à 15, dans lequel le moyen de soupape comprend deux telles soupapes (32) respectivement pour bloquer l'écoulement le long d'un des chemins (29) de la première (24) à la deuxième (28) chambre d'amortissement et permettre l'écoulement le long de ce chemin (29) depuis la deuxième (28) jusqu'à la première (24) chambre et pour bloquer l'écoulement le long de l'autre (30) des chemins de la deuxième (28) à la première (24) chambre et permettre l'écoulement le long de ce chemin (30) de la première (24) à la deuxième (28) chambre.

17. Amortisseur selon l'une quelconque des revendications précédentes, dans lequel les boîtiers contiennent en outre une chambre de ressort (16) pour un milieu gazeux compressible lors du mouvement télescopique des boîtiers (11, 12) conjointement pour superposer une action de ressort à une action d'amortissement pourvue par la commande de l'écoulement du fluide d'amortissement, le piston (22) étant prévu pour pouvoir être déplacé par le milieu gazeux comprimé.
